# EUROPEAN PATENT APPLICATION

(11) **EP 3 819 831 A2**
(43) Date of publication of application: **12.05.2021**
(21) Application number: 20201654.9
(22) Date of filing: 13.10.2020
(51) Int. Cl.: G06Q 10/00, G06Q 10/06

(54) **CONTEXT SPECIFIC TRAINING FOR PROCESS OPERATORS**

(30) Priority: 29.10.2019 US 201916667375
(71) Applicant: Honeywell International Inc., Charlotte, NC 28202 (US)
(72) Inventor: GANAPATHI, Ramakrishnan, Charlotte, NC 28202 (US); NARAYAN, Anand, Charlotte, NC 28202 (US); KRISHNAMURTHY, Ananthapadmanabha, Charlotte, NC North Carolina 28202 (US)
(74) Representative: Dennemeyer & Associates S.A.

(57) **Abstract**

A method includes monitoring an industrial process for an occurrence of a particular process abnormality and in response to finding the occurrence of the particular process abnormality, monitoring a control action response provided by a particular process operator. A determination is made as to whether the control action response provided by the particular process operator meets a benchmark control action response. When the control action response provided by the particular process operator does not meet the benchmark control action response, a simulation profile is created that when entered into a process simulator that is configured to simulate the industrial process, recreates the occurrence of the particular process abnormality in the process simulator to allow the particular process operator to practice providing control action responses in response to the particular process abnormality.

## Description

### Technical Field

The present disclosure relates generally to training process operators and more particularly to context specific simulation training for process operators.

### Background

Industrial process control and automation systems are often used to automate large and complex industrial processes. These types of systems routinely include sensors, actuators, and controllers. The controllers are often arranged hierarchically in a control and automation system. For example, lower-level controllers are often used to receive measurements from the sensors and perform process control operations to generate control signals for the actuators. Higher-level controllers are often used to perform higher-level functions, such as planning, scheduling, and optimization operations. Human process operators routinely interact with controllers and other devices in a control and automation system, such as to review warnings, alarms, or other notifications, and make adjustments to control or other operations to keep the process within desired process limits. When a process operator responds incorrectly to an alarm, warning or other process condition, the overall efficiency of a plant deteriorates. What would be desirable is a context specific training system in which a process operator can train under the same or similar process conditions that the process operator had previously under-performed.

### Summary

The present disclosure relates generally to a context specific training system in which a process operator can train under the same or similar process conditions that the process operator had previously under-performed. A particular example of the present disclosure includes an illustrative method for training process operators that provide control action responses in response to process abnormalities of an industrial process. The illustrative method includes monitoring the industrial process for an occurrence of a particular process abnormality and in response to finding the occurrence of the particular process abnormality, monitoring a control action response provided by a particular process operator. A determination may be made as to whether the control action response provided by the particular process operator meets a benchmark control action response. When the control action response provided by the particular process operator does not meet the benchmark control action response, a simulation profile is created that when entered into a process simulator that is configured to simulate the industrial process, recreates the occurrence of the particular process abnormality in the process simulator to allow the particular process operator to practice providing control action responses in response to the particular process abnormality previously experienced by the process operator.

Another example of the present disclosure includes a method for training process operators that provide control action responses in response to process abnormalities of an industrial process. This illustrative method includes monitoring the industrial process for an occurrence of process abnormalities over time and in response to each of the process abnormalities, monitoring a control action response provided by a corresponding process operator. A determination may be made as to whether each of the control action responses meets a corresponding benchmark. A simulation profile is created for each of at least some of the control action responses that do not meet the corresponding benchmark, wherein each simulation profile, when entered into a process simulator that is configured to simulate the industrial process, recreates the corresponding process abnormality in the process simulator to allow a process operator to practice providing control action responses in response to the corresponding process abnormality.

Another example of the present disclosure includes a non-transitory, computer-readable medium including instructions that when executed by a processor cause the processor to monitor an industrial process for an occurrence of a particular process abnormality and in response to finding the occurrence of the particular process abnormality, monitoring a control action response provided by a particular process operator. A determination may be made as to whether the control action response provided by the particular process operator meets a predetermined benchmark. When the control action response provided by the particular process operator does not meet the predetermined benchmark, a simulation profile is created that when entered into a process simulator that is configured to simulate the industrial process, recreates the occurrence of the particular process abnormality in the process simulator to allow the particular process operator to practice providing control action responses in response to the particular process abnormality.

The preceding summary is provided to facilitate an understanding of some of the innovative features unique to the present disclosure and is not intended to be a full description. A full appreciation of the disclosure can be gained by taking the entire specification, claims, figures, and abstract as a whole.

### Brief Description of the Figures

The disclosure may be more completely understood in consideration of the following description of various examples in connection with the accompanying drawings, in which:
Figure 1 is a schematic block diagram of an illustrative industrial process control and automation system;
Figure 2 is a flow diagram showing an illustrative method;
Figure 3 is a flow diagram showing an illustrative method;
Figure 4 is a flow diagram showing an illustrative method;
Figure 5 is a flow diagram showing an illustrative method;
Figure 6 is a flow diagram showing an illustrative method;
Figure 7 is a graphical representation of a benchmark response to a process abnormality; and
Figure 8 is a graphical representation of a sub-optimal response to the process abnormality of Figure 7.

While the disclosure is amenable to various modifications and alternative forms, specifics thereof have been shown by way of example in the drawings and will be described in detail. It should be understood, however, that the intention is not to limit the disclosure to the particular examples described. On the contrary, the intention is to cover all modifications, equivalents, and alternatives falling within the spirit and scope of the disclosure.

### Description

The following description should be read with reference to the drawings, in which like elements in different drawings are numbered in like fashion. The drawings, which are not necessarily to scale, depict examples that are not intended to limit the scope of the disclosure. Although examples are illustrated for the various elements, those skilled in the art will recognize that many of the examples provided have suitable alternatives that may be utilized.

All numbers are herein assumed to be modified by the term "about", unless the content clearly dictates otherwise. The recitation of numerical ranges by endpoints includes all numbers subsumed within that range (e.g., 1 to 5 includes 1, 1.5, 2, 2.75, 3, 3.80, 4, and 5).

As used in this specification and the appended claims, the singular forms "a", "an", and "the" include the plural referents unless the content clearly dictates otherwise. As used in this specification and the appended claims, the term "or" is generally employed in its sense including "and/or" unless the content clearly dictates otherwise.

It is noted that references in the specification to "an embodiment", "some embodiments", "other embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is contemplated that the feature, structure, or characteristic is described in connection with an embodiment, it is contemplated that the feature, structure, or characteristic may be applied to other embodiments whether or not explicitly described unless clearly stated to the contrary.

It will be appreciated that industrial process control and automation systems require maintenance and upkeep, as well as rapid responses to various alarms and warnings in order to maintain the industrial plant in an efficient, safe and productive environment. Various personnel such as process operators, system maintenance engineers, control engineers, field engineers, technicians make decisions and perform maintenance to ensure the industrial process control and automation systems run under normal operating conditions. Managing a large workforce of individuals and technicians is important for the efficient operation of industrial process, control, and automation systems within an industrial plant. For example, individuals of varying skill and knowledge can lead to inconsistent operations during various shifts. Due to the continual development of technology, it is important for the workforce and personnel who oversee an industrial plant to continually update their skill set in order to efficiently operate new equipment and the like.

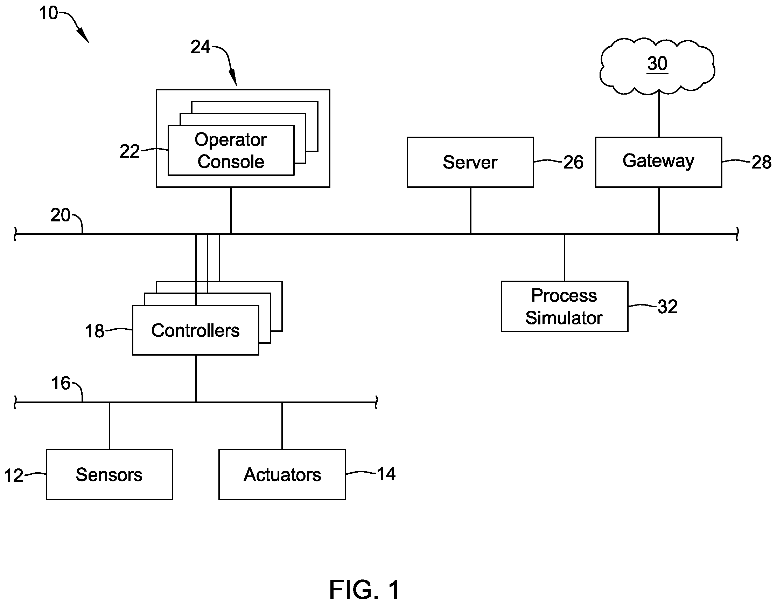

Figure 1 provides a schematic block diagram showing an illustrative industrial process control and automation system 10. As shown in Figure 1, the system 10 includes various components that facilitate production or processing of at least one product or other material. For instance, the system 10 can be used to facilitate control over components in one or multiple industrial plants. The industrial plants may be one or more processing facilities (or one or more portions thereof), such as one or more manufacturing facilities for producing at least one product or other material. In general, the industrial plants may implement one or more industrial processes and can individually or collectively be referred to as a process system. A process system generally represents any system or portion thereof configured to process one or more products or other materials in some manner.

In Figure 1, the system 10 includes one or more sensors 12 and one or more actuators 14. The sensors 12 and the actuators 14 represent components in a process system that may perform any of a wide variety of functions. As an example, the sensors 12 may measure a wide variety of characteristics in the process system, such as but not limited to temperature, pressure, flow rate, chemical concentrations, or a voltage transmitted through an electrical conductor. The actuators 14 may represent devices that are configured to alter a wide variety of characteristics in the process system. As an example, the actuators 14 may open or close one or more valves, or increase or decrease a process set point or the like. At any rate, each sensor 12 may include any suitable structure for measuring one or more characteristics in a process system. Each actuatorl4 may include any suitable structure for operating on or affecting one or more conditions of a process system.

In the example shown, a network 16 is coupled to the sensors 12 and the actuators 14. The network 16 facilitates interaction with the sensors 12 and the actuator 14. For example, the network 16 may transmit measurement data from the sensors 12 and/or may provide control signals to the actuator 14. The network 16 may represent any suitable network or combination of networks. As particular examples, the network 16 could represent at least one Ethernet network (such as one supporting a FOUNDATION FIELDBUS protocol), electrical signal network (such as a HART network), Ethernet network, pneumatic control signal network, or any other or additional type(s) of network(s), or any other type of communication path.

The illustrative system 10 also includes various controllers 18. The controllers 18 may, for example, be used in the system 10 to perform various functions in order to control one or more industrial processes. To illustrate, a first set of controllers 18 may use measurements from one or more of the sensors 12 to control the operation of one or more of the actuators 14. A controller 18 may receive measurement data from one or more sensors 12 and use the measurement data to generate control signals for one or more actuators 14. A second set of controllers 18 may be used to optimize the control logic or other operations performed by the first set of controllers. A third set of controllers 18 could be used to perform additional functions. The controllers 18 could therefore support a combination of approaches, such as regulatory control, advanced regulatory control, supervisory control, and advanced process control.

Each controller 18 may include any suitable structure for controlling one or more aspects of an industrial process. At least some of the controllers 18 may, for example, represent proportional-integral-derivative (PID) controllers or multivariable controllers, such as controllers implementing model predictive control (MPC) or other advanced predictive control (APC). As a particular example, each controller 18 may represent a computing device running a real-time operating system, a WINDOWS operating system, or other operating system.

In the illustrative system 10, at least one network 20 couples to the controllers 18 and the other devices in the system 10. The network 20 facilitates communication of information between components. The network 20 may represent any suitable network or combination of networks. For example, the network 20 could represent an Ethernet network or any other suitable communication path.

Operator access to and interaction with the controllers 18 and other components of the system 10 can occur via various operator consoles 22. Each operator console 22 may be used to provide information to an operator and receive information from an operator. For example, each operator console 22 may provide information identifying a current state of an industrial process to the operator, such as values of various process variables and warnings, alarms, or other states associated with the industrial process. Each operator console 22 may also receive information affecting how the industrial process is controlled, such as by receiving set points or control modes for process variables controlled by the controllers 18 or other information that alters or affects how the controllers 18 control the industrial process. Each operator console 22 may include any suitable structure for displaying information to and interacting with an operator. For example, each operator console 22 may represent a computing device running a WINDOWS operating system or other operating system.

Multiple operator consoles 22 may be grouped together and used in one or more control rooms 24. Each control room 24 may include any number of operator consoles 22 in any suitable arrangement. In some cases, multiple control rooms 24 may be used to control an industrial plant, such as when each control room 24 contains operator consoles 22 used to manage a discrete part of the industrial process/plant.

The illustrative system 10 also includes one or more servers 26. Each server 26 denotes a computing device that executes applications for users of the operator consoles 22 or other applications. The applications could be used to support various functions for the operator consoles 22, the controllers 18, or other components of the system 10. The servers 26 may be located locally or remotely from the illustrative system 10. For instance, the functionality of the server 26 could be implemented in a computing cloud or a remote server communicatively coupled to the system 10 via a gateway such as gateway 28. Each server 26 may represent a computing device running a WINDOWS operating system or other operating system. Note that while shown as being local within the system 10, the functionality of the server 26 may be remote from the system 10. For instance, the functionality of the server 26 may be implemented in a cloud-based server 30 or a remote server communicatively coupled to the system 10 via the gateway 28.

A process simulator 32 may be operably coupled with the network 20 such that the process simulator 32 has access to information available within the system 10, including information reported from the sensors 12 and the actuators 14 and from the controllers 18. The process simulator 32 may be a desktop or cloud-based computer, for example. In some cases, at least some of the functionality of the process simulator 32 may be manifested within the server 26 and/or the cloud-based server 30. These are just examples. The process simulator 32 may have access to data displayed or otherwise manipulated within the operator consoles 22, and in some cases, other data/settings of the industrial process. Consequently, the process simulator 32 is able to see and analyze how a process operator running one of the operator consoles 22 responds to a particular situation.

Although Figure 1 shows one example of the industrial process control and automation system 10, it will be appreciated that various changes may be made. For example, the control and automation system 10 may include any number of sensors, actuators, controllers, servers, networks, operator stations, operator consoles, control rooms, networks, and other components. Also, the makeup and arrangement of the system 10 in Figure 1 is for illustration only. Components may be added, omitted, combined, further subdivided, or placed in any other suitable configuration according to particular needs. Further, particular functions have been described as being performed by particular components of the system 10. This is for illustration only. In general, control and automation systems are highly configurable and can be configured in any suitable manner according to particular needs. In addition, Figure 1 illustrates one example operational environment of an industrial plant where system operations done by the various personnel can be monitored. This functionality can be used in any other suitable system, and that system need not be used for industrial process control and automation.

It will be appreciated that the process simulator 32 will be exposed to a large number of routine and less-routine occurrences in which a process variable is either under a minimum threshold or over a maximum threshold. In some cases, an upset may cause the process variable to either be under a minimum threshold, over a maximum threshold or otherwise out of specification. An upset may be something unexpected, such as a loss of communication either from a sensor 12 or to an actuator 14, or just a process variable that has drifted out of range. The process variable may be a pressure value, a temperature value, a flow rate, a concentration value, and/or anything else that may be reported by one or more of the sensors 12. In some cases, it is a combination of process variable that drifts out of range.

The process simulator 32 may store information that includes the data reported by the sensors 12, the positions of the actuators 14, as well as the process operator responses (e.g. operator inputs). The process simulator 32 may analyze this information to categorize particular responses as being good responses or bad responses. Sufficiently good responses may be stored and labeled as benchmarks. These benchmarks may subsequently be used as a measuring stick to compare subsequent performance of process operators under similar process conditions.

When a particular response is labeled as a bad response, a determination may be made that this is an indication that a particular process operator needs to practice how they respond to particular process conditions/abnormalities. This determination may, for example, be made automatically by the process simulator 32. This determination may be made by a human supervisor in response to a report provided by the process simulator 32. When a determination is made that a particular process operator needs to practice a particular plant situation, the process simulator 32 utilizes archived stored data to re-create a process simulation that can run on the process simulator 32. The process simulation may start with the exact conditions (sensor inputs, actuator positions, etc.) that occurred during the particular response that was labeled as a bad response, thereby providing the particular process operator an opportunity to improve on his or her previous performance. The process simulation may instead start with the specific conditions (sensor inputs, actuator positions, etc.) that occurred during a corresponding benchmark response that is closest to the conditions that occurred during the particular response that was labeled as a bad response, thereby providing the particular process operator an opportunity to match the performance represented by the benchmark response.

In some cases, the process simulator 32 may emulate one of the operator consoles 22, displaying data in the same format as displayed on one of the operator consoles 22. The process simulator 32 may display the previous performance (the one labeled as a bad response) in combination with the process simulation, so that the process operator can see in real time how he or she is doing compared to their previous poor response, although this is not required. The process simulator 32 may display the benchmark performance in combination with the process simulation, so that the process operator can see in real time how he or she is doing relative to the benchmark performance, although this is not required. In some instances, the process simulator 32 may only display the process simulation during operation of the process simulation. As a result, the process operator has to operate as if they are responding to a real situation in which they previously had under-performed. The process simulator 32 may subsequently output information that allows the process operator to see how they did after the process simulation has ended. The process simulator 32 may analyze how they did, and make a determination as to whether the particular process operator needs to train further on that particular process simulation.

In order to generate a process simulation, the process simulator 32 may extract the plant and unit state for the particular process condition (e.g. alarm condition) to be simulated. The plant state and unit state is captured using the process values and events of tags from various data sources. A cataloged benchmark episode profile may be obtained which includes features like operator actions, value changes, first operator response time, duration of the alarm, rate at which values change, etc. The process simulator 32 may obtain the cataloged alarm episode that needs to be simulated. The cataloged alarm episode may include operator actions, value changes, date and time of occurrence, and the like. Additional data includes configuration data, display data, process values and event data for a time duration that captures the plant and unit state before and sometimes after the particular process condition (e.g. alarm condition) to be simulated. Once created, the process simulator 32 may run the process simulation for the operator.

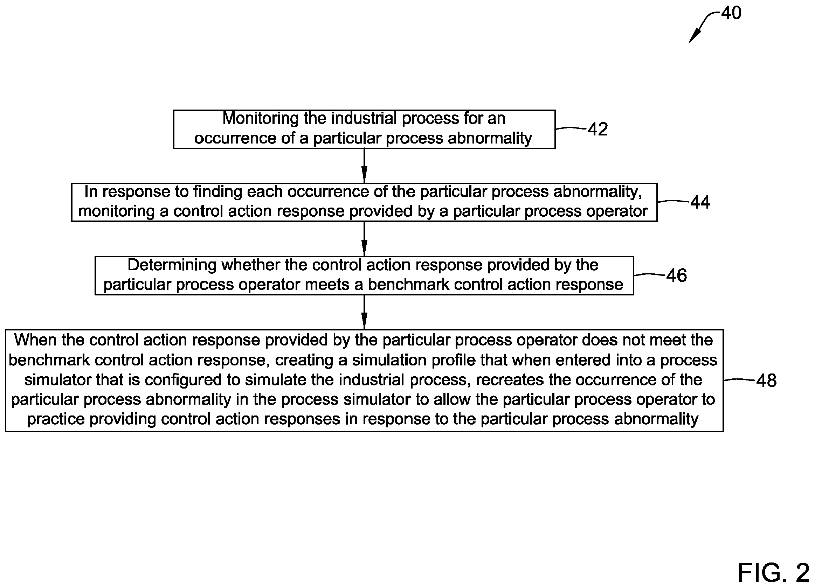

Figure 2 is a flow diagram showing an illustrative method 40 for training process operators that provide control action responses in response to process abnormalities of an industrial process. The industrial process may be monitored for an occurrence of a particular process abnormality, as indicated at block 42. The particular process abnormality may correspond to an alarm event, for example. As another example, the particular process abnormality may correspond to a particular set of process operating conditions. In response to finding the occurrence of the particular process abnormality, and as indicated at block 44, a control action response provided by a particular process operator may be monitored. A determination may be made as to whether the control action response provided by the particular process operator meets a benchmark control action response, as indicated at block 46. The benchmark control action response may, for example, be based at least in part on a control action response provided by another process operator, or by the same process operator in an earlier response.

When the control action response provided by the particular process operator does not meet the benchmark control action response, and as indicated at block 48, a simulation profile is created that when entered into a process simulator (such as the process simulator 32) that is configured to simulate the industrial process, recreates the occurrence of the particular process abnormality in the process simulator to allow the particular process operator to practice providing control action responses in response to the particular process abnormality. The simulation profile may include one or more process values and/or one or more process operating conditions of the industrial process that correspond to the particular process abnormality. In some cases, the process simulator may include a process model for modeling the industrial process, and may be further configured to read the simulation profile and use the process model and the one or more process values and/or one or more process operating conditions to recreate the occurrence of the particular process abnormality in the process simulator. The process simulator may also include a user interface for accepting a simulated control action response provided by the particular process operator, with the process simulator simulating a reaction of the industrial process to the simulated control action response. In some cases, monitoring the industrial process may include monitoring one or more process values of the industrial process, and the control action response may include changing a control input value of the industrial process.

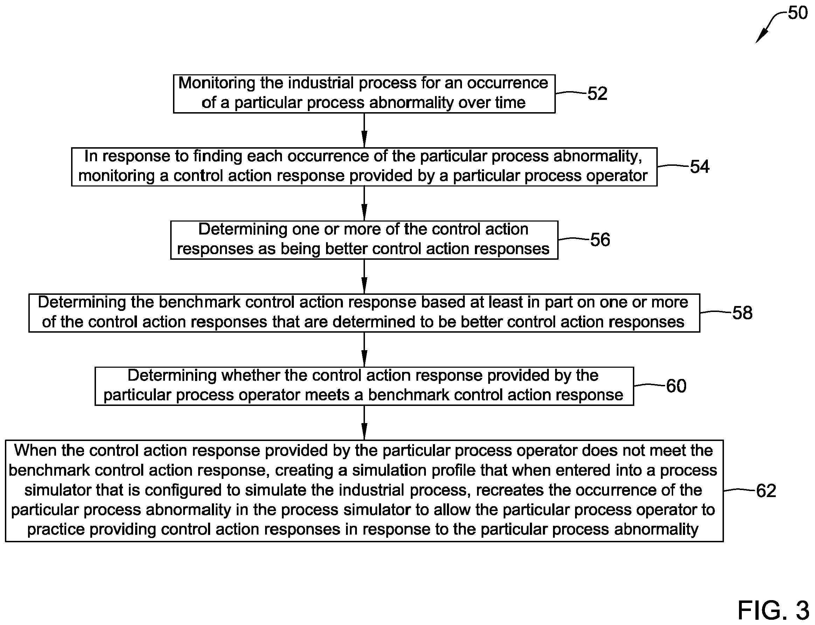

Figure 3 is a flow diagram showing an illustrative method 50 for training process operators that provide control action responses in response to process abnormalities of an industrial process. The industrial process may be monitored for an occurrence of a particular process abnormality over time, as indicated at block 52. In response to finding each occurrence of the particular process abnormality, and as indicated at block 54, a control action response provided by a particular process operator may be monitored. One or more of the control action responses may be determined as being better control action responses, as indicated at block 56. The benchmark control action responses may be determined based at least in part on one or more of the control action responses that are determined to be better control action responses, as indicated at block 58.

A determination may be made as to whether the control action response provided by the particular process operator meets a benchmark control action response, as indicated at block 60. When the control action response provided by the particular process operator does not meet the benchmark control action response, and as indicated at block 62, a simulation profile is created that when entered into a process simulator (such as the process simulator 32) that is configured to simulate the industrial process, recreates the occurrence of the particular process abnormality in the process simulator to allow the particular process operator to practice providing control action responses in response to the particular process abnormality.

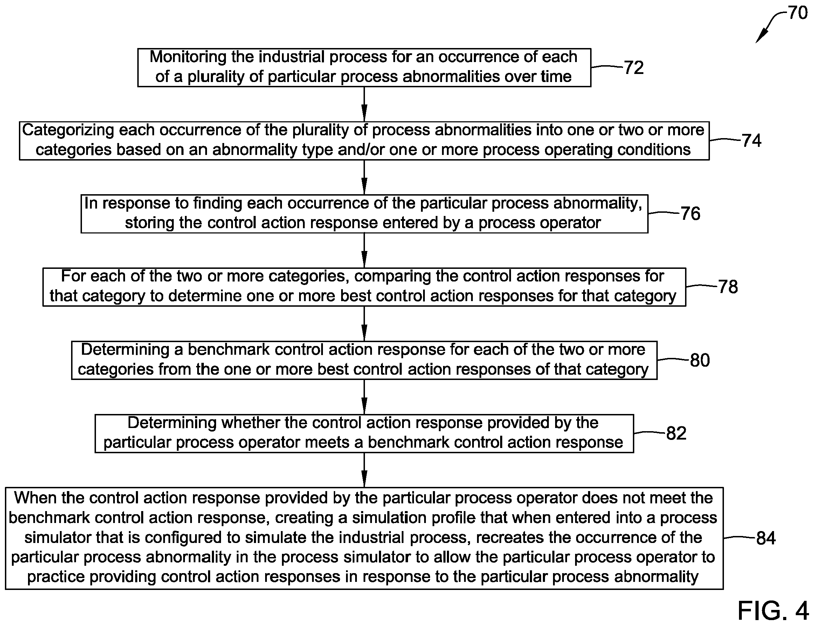

Figure 4 is a flow diagram showing an illustrative method 70 for training process operators that provide control action responses in response to process abnormalities of an industrial process. The industrial process may be monitored for an occurrence of a particular process abnormality over time, as indicated at block 72. Each occurrence of the plurality of process abnormalities may be categorized into one of two or more categories based on an abnormality type and/or one or more process operating conditions, as indicated at block 74. In response to finding each occurrence of the plurality of process abnormalities, and as indicated at block 76, storing the control action response entered by a process operator may be stored. For each of the two or more categories, and as indicated at block 78, the control action responses for that category may be compared to determine one or more best control action responses for that category. A benchmark control action response may be determined for each of the two or more categories from the one or more best control action responses of that category, as indicated at block 80.

A determination may be made as to whether the control action response provided by the particular process operator meets a benchmark control action response, as indicated at block 82. When the control action response provided by the particular process operator does not meet the benchmark control action response, and as indicated at block 84, a simulation profile is created that when entered into a process simulator (such as the process simulator 32) that is configured to simulate the industrial process, recreates the occurrence of the particular process abnormality in the process simulator to allow the particular process operator to practice providing control action responses in response to the particular process abnormality.

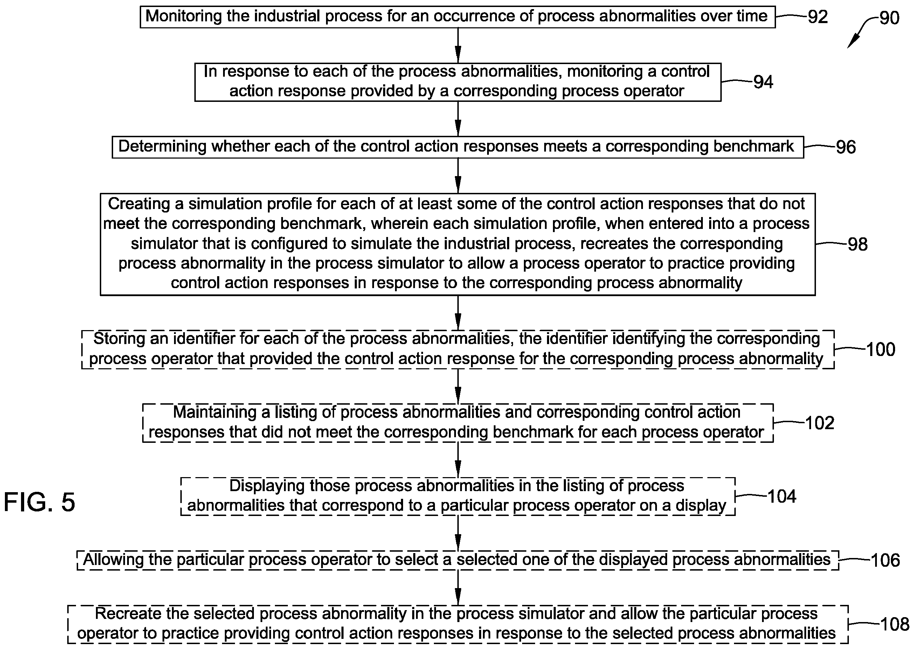

Figure 5 is a flow diagram showing an illustrative method 90 for training process operators that provide control action responses in response to process abnormalities of an industrial process. The industrial process may be monitored for an occurrence of process abnormalities over time, as indicated at block 92. In some instances, the industrial process may be controlled by a Distributed Control System (DCS). In response to each of the process abnormalities, and as indicated at block 94, monitoring a control action response provided by a corresponding process operator may be monitored. A determination may be made as to whether each of the control action responses meets a corresponding benchmark, as indicated at block 96. The control action response may include changing a single control input value of the industrial process to control a single process value. The control action response may include changing multiple control input values of the industrial process to control a single process value. In some cases, the control action response may include changing multiple control input values of the industrial process to control multiple process values.

A simulation profile may be created for each of at least some of the control action responses that do not meet the corresponding benchmark, wherein each simulation profile, when entered into a process simulator that is configured to simulate the industrial process, recreates the corresponding process abnormality in the process simulator to allow a process operator to practice providing control action responses in response to the corresponding process abnormality, as indicated at block 98.

In some cases, and as indicated at block 100, the method 90 may optionally include storing an identifier for each of the process abnormalities, the identifier identifying the corresponding process operator that provided the control action response for the corresponding process abnormality. The method 90 may optionally include maintaining a listing of process abnormalities and corresponding control action responses that did not meet the corresponding benchmark for each process operator, as indicated at block 102. The method 90 may optionally include displaying those process abnormalities in the listing of process abnormalities that correspond to a particular process operator on a display, as indicated at block 104. The particular process operator may be allowed to select a selected one of the displayed process abnormalities, as indicated at block 106. In some cases, and as indicated at block 108, the selected process abnormality may be recreated in the process simulator and allow the particular process operator to practice providing control action responses in response to the selected process abnormality.

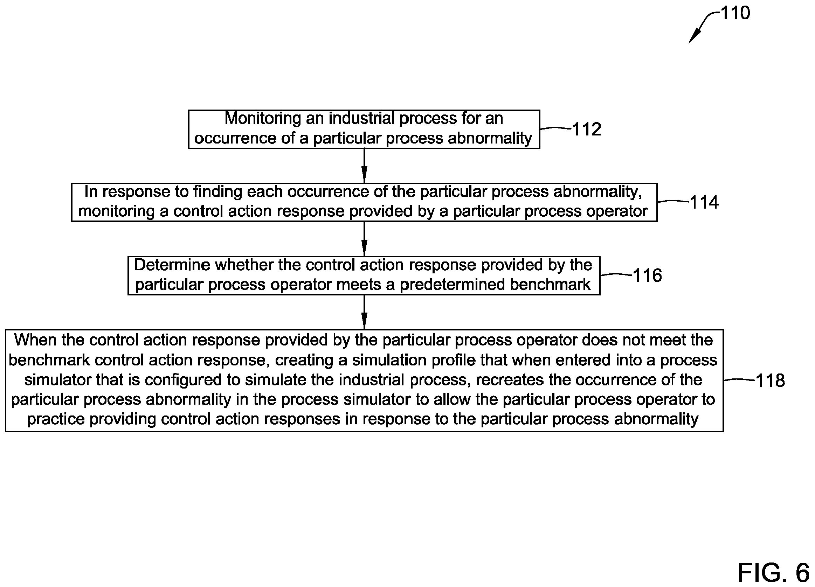

Figure 6 is a flow diagram showing a method 110 that may be carried out by a processor executing instructions stored on a non-transitory, computer-readable medium. The method 110 includes monitoring an industrial process for an occurrence of a particular process abnormality, as indicated at block 112. The process abnormality may, for example, include an alarm event. In response to finding the occurrence of the particular process abnormality, monitoring a control action response provided by a particular process operator is monitored, as indicated at block 114. A determination is made as to whether the control action response provided by the particular process operator meets a predetermined benchmark, as indicated at block 116. When the control action response provided by the particular process operator does not meet the predetermined benchmark, and as indicated at block 118, a simulation profile may be created that when entered into a process simulator that is configured to simulate the industrial process, recreates the occurrence of the particular process abnormality in the process simulator to allow the particular process operator to practice providing control action responses in response to the particular process abnormality.

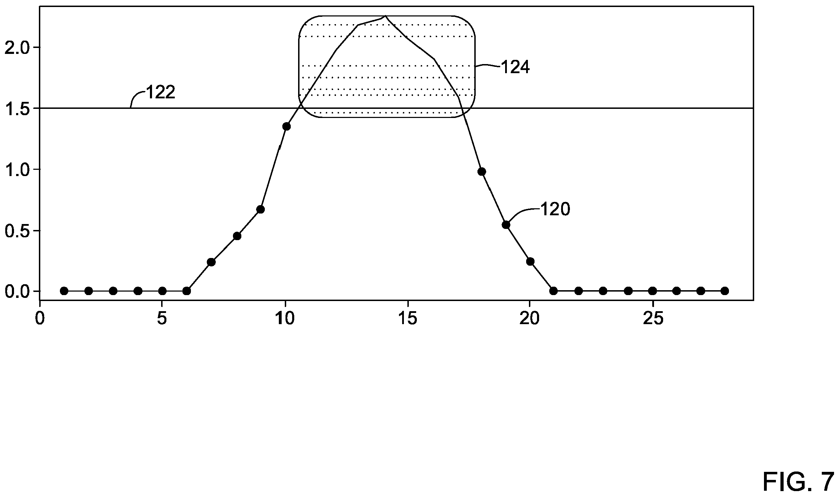

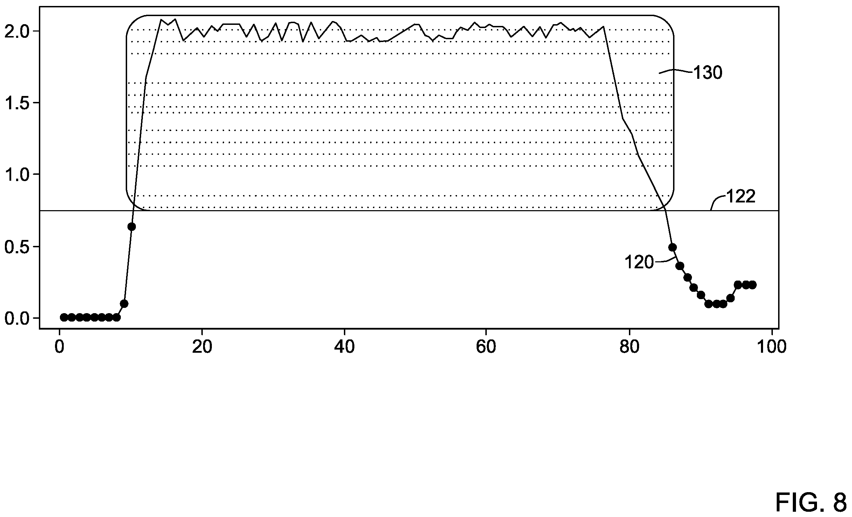

Figures 7 and 8 provide graphical representations of a measurable variable 120 of an industrial plant that spikes above a threshold or an alarm trip point 122. That is, when the measurable variable 120 is elevated above the alarm trip point 122, an alarm 124 occurs. As illustrated, a gauge of the effectiveness of the operator response may be represented by the area depicting a difference between the actual process value (of the measurable variable 120) and the alarm trip point 122. The measurable variable 120 may be pressure, temperature, volume level, flow rate, and the like, or a combination thereof. Because the measurable variable 120 was brought under control, and under the alarm trip point 122, relatively quickly, Figure 7 may be considered as being an example of a benchmark response.

In contrast, Figure 8 may be considered as an example of a response that is not considered to be optimal. In Figure 8, the measurable variable 120 may be seen to exceed an alarm trip point 122 for a considerable length of time. An alarm 130 results. By comparing the alarm 124 to the alarm 130, it can be seen that Figure 8 may be considered as being an example of an operator response that indicates a need for further training for that particular operator, at least for that particular situation.

Having thus described several illustrative embodiments of the present disclosure, those of skill in the art will readily appreciate that yet other embodiments may be made and used within the scope of the claims hereto attached. It will be understood, however, that this disclosure is, in many respects, only illustrative. Changes may be made in details, particularly in matters of shape, size, arrangement of parts, and exclusion and order of steps, without exceeding the scope of the disclosure. The disclosure's scope is, of course, defined in the language in which the appended claims are expressed.

## Claims

1. A method for training process operators that provide control action responses in response to process abnormalities of an industrial process, the method comprising:
monitoring the industrial process for an occurrence of a particular process abnormality;
in response to finding the occurrence of the particular process abnormality, monitoring a control action response provided by a particular process operator;
determining whether the control action response provided by the particular process operator meets a benchmark control action response; and
when the control action response provided by the particular process operator does not meet the benchmark control action response, creating a simulation profile that when entered into a process simulator that is configured to simulate the industrial process, recreates the occurrence of the particular process abnormality in the process simulator to allow the particular process operator to practice providing control action responses in response to the particular process abnormality.

2. The method of claim 1, wherein the particular process abnormality corresponds to an alarm event.

3. The method of claim 1, wherein the particular process abnormality corresponds to a set of process operating conditions.

4. The method of claim 1, wherein the benchmark control action response is based at least in part on a control action response provided another process operator.

5. The method of claim 1, further comprises:
monitoring the industrial process for the occurrence of the particular process abnormality over time;
in response to finding each of a plurality of occurrences of the particular process abnormality, monitoring the control action response of a corresponding process operator; and
determining one or more of the control action responses as being better control action responses; and
determine the benchmark control action response based at least in part on one or more of the control action responses that are determined to be better control action responses.

6. The method of claim 1, further comprising:
monitoring the industrial process for the occurrence of each of a plurality of process abnormalities over time;
categorizing each occurrence of the plurality of process abnormalities into one of two or more categories based on an abnormality type and/or one or more process operating conditions;
in response to finding each occurrence of the plurality of process abnormalities, storing the control action response entered by a process operator; and
for each of the two or more categories, comparing the control action responses for that category to determine one or more best control action responses for that category; and
determining a benchmark control action response for each of the two or more categories from the one or more best control action responses of that category.

7. The method of claim 1, wherein the simulation profile comprises one or more process values and/or one or more process operating conditions of the industrial process that correspond to the particular process abnormality.

8. The method of claim 7, wherein the process simulator comprises a process model for modeling the industrial process, and is further configured to read the simulation profile and use the process model and the one or more process values and/or one or more process operating conditions to recreate the occurrence of the particular process abnormality in the process simulator.

9. The method of claim 8, wherein the process simulator further comprises a user interface for accepting a simulated control action response provided by the particular process operator, with the process simulator simulating a reaction of the industrial process to the simulated control action response.

10. The method of claim 1, wherein monitoring the industrial process comprises monitoring one or more process values of the industrial process, and the control action response comprises changing a control input value of the industrial process.

11. A non-transitory, computer-readable medium including instructions that when executed by a processor cause the processor to:
monitor an industrial process for an occurrence of a particular process abnormality;
in response to finding the occurrence of the particular process abnormality, monitoring a control action response provided by a particular process operator;
determine whether the control action response provided by the particular process operator meets a predetermined benchmark; and
when the control action response provided by the particular process operator does not meet the predetermined benchmark, create a simulation profile that when entered into a process simulator that is configured to simulate the industrial process, recreate the occurrence of the particular process abnormality in the process simulator to allow the particular process operator to practice providing control action responses in response to the particular process abnormality.

12. The non-transitory, computer-readable medium of claim 11, wherein the particular process abnormality corresponds to an alarm event.

13. The non-transitory, computer-readable medium of claim 11, wherein the particular process abnormality corresponds to a set of process operating conditions.

14. The non-transitory, computer-readable medium of claim 11 that includes instructions that when executed by the processor cause the processor to:
monitor the industrial process for the occurrence of the particular process abnormality over time;
in response to finding each of a plurality of occurrences of the particular process abnormality, monitor the control action response of a corresponding process operator; and
determine one or more of the control action responses as being better control action responses; and
determine the benchmark control action response based at least in part on one or more of the control action responses that are determined to be better control action responses.

15. The non-transitory, computer-readable medium of claim 11 that includes instructions that when executed by the processor cause the processor to:
monitor the industrial process for the occurrence of each of a plurality of process abnormalities over time;
categorize each occurrence of the plurality of process abnormalities into one of two or more categories based on an abnormality type and/or one or more process operating conditions;
in response to finding each occurrence of the plurality of process abnormalities, store the control action response entered by a process operator; and
for each of the two or more categories, compare the control action responses for that category to determine one or more best control action responses for that category; and
determine a benchmark control action response for each of the two or more categories from the one or more best control action responses of that category.
